# EUROPÄISCHE PATENTSCHRIFT

(11) **EP 3 301 370 B1**
(45) Veröffentlichungstag und Bekanntmachung des Hinweises auf die Patenterteilung: **11.09.2019**
(21) Anmeldenummer: 17193500.0
(22) Anmeldetag: 27.09.2017
(51) Int. Cl.: F23R 3/28

(54) **BRENNERKOPF, BRENNERSYSTEM UND VERWENDUNG DES BRENNERSYSTEMS IN EINER GASTURBINENANLAGE**
BURNER HEAD, BURNER SYSTEM AND USE OF THE BURNER SYSTEM IN A GAS TURBINE COMBUSTOR
TÊTE DE BRÛLEUR, SYSTÈME DE BRÛLEUR ET UTILISATION DU SYSTÈME DE BRÛLEUR DANS LA CHAMBRE DE COMBUSTION D'UNE TURBINE À GAZ

(30) Priorität: 30.09.2016 DE 102016118633
(43) Veröffentlichungstag der Anmeldung: 04.04.2018
(73) Patentinhaber: Deutsches Zentrum für Luft- und Raumfahrt e.V., 51147 Köln (DE)
(72) Erfinder: Seliger, Hannah, 70825 Korntal-Münchingen (DE); Huber, Andreas, 78549 Spaichingen (DE)
(74) Vertreter: Fleck, Hermann-Josef

(56) Entgegenhaltungen:
- EP-A1- 2 085 696
- WO-A1-2009/033000
- FR-A1- 2 289 740
- US-A- 1 539 093
- US-A- 2 768 497
- US-A1- 2009 277 182
- US-A1- 2015 089 954
- US-A1- 2016 178 206

## Beschreibung

Die Erfindung betriff einen Brennerkopf zur Zufuhr von Brennluft und Brennstoff in eine Brennkammer eines Brennersystems, wobei der Brennerkopf zur Zufuhr der Brennluft um eine Längsachse angeordnete Zufuhrdüsen mit Zufuhröffnungen zur Anordnung an der Brennkammer umfasst, wobei sich die Zufuhrdüsen im äußeren Bereich einer Stirnwand befinden, sodass in montiertem Zustand an der Brennkammer der radiale Abstand der Zufuhröffnungen bezüglich ihrer Mittelpunkte zu einer Umfangswandung der Brennkammer geringer ist als zu der Längsachse, wobei zumindest zweien der Zufuhrdüsen je eine Brennstoffdüse zur Zufuhr von Brennstoff zugeordnet ist, wobei dem Brennerkopf zur Brennstoffversorgung eine zentrale Brennstoffleitung mit einem auf der Längsachse liegenden Verteilerbereich zum Verteilen von Brennstoff auf die Brennstoffdüsen zugeordnet ist und wobei von dem Verteilerbereich fingerartige Zweigleitungen zum Verteilen des Brennstoffes auf die einzelnen Brennstoffdüsen abgehen. Ferner betrifft die Erfindung ein Brennersystem mit einer Brennkammer und einem Brennerkopf sowie die Verwendung des Brennersystems in Verbindung mit einer Gasturbine.

Brennersysteme mit einem Brennerkopf der oben genannten Art kommen beispielsweise in Gasturbinen zum Einsatz. Ein derartiger Brennerkopf ist aus der US 1 539 093 A bekannt. Dabei ist ein Gasbrenner offenbart, bei dem Brennstoff über eine Gassammelleitung und mehrere radial ausgerichtete Röhren und daran angeformte konische Düsen in Luftzufuhröffnungen eingebracht wird. Die Luftzufuhröffnungen sind in eine orthogonal zur Längsachse angeordneten Brennerstirnplatte und einen daran aufgesetzten feuerfesten Block eingeformt, d. h. von Vollmaterial umgeben. Die radial ausgerichteten Röhren gehen in rechten Winkeln von der Gassammelleitung ab. Die daran angeformten konischen Düsen sind wiederum im rechten Winkel zu den Röhren orientiert.

Die US 2005 / 0 210 880 A1 zeigt einen Gasturbinenbrenner, der als Diffusions- oder Vormischbrenner ausgebildet sein kann. Fingerartige Zweigleitungen sind nicht vorhanden.

Die DE 10 2010 036 656 A1 offenbart eine Brennstoffeinspritzdüse zum Einsatz in einer Gasturbinenbrennkammer, in der ein erstes Gas (Brennstoff) und ein zweites Gas (ebenfalls Brennstoff) in ein drittes Gas (Luft) eingemischt werden. Fingerartige Zweigleitungen sind nicht vorhanden.

Aus der US 5 437 158 A geht ein Brenner mit einem Brennerkopf für eine nicht vorgemischte Zugabe von Brennluft und Brennstoff in eine Brennkammer hervor. Der Brennstoff wird über eine Brennstoffzufuhr mit einer Hauptleitung und mehreren Zweigleitungen, die gerade oder rechtwinklig von der Hauptleitung abgehen, durch eine ebene Brennerstirnplatte, ohne Vormischung mit Brennluft, in die Brennkammer geleitet.

Daneben weisen zur Versorgung der Brennkammer mit Brennstoff bekannte Brennstoffzufuhreinrichtungen häufig ein ringförmiges Brennstoffplenum in Art eines Verteilerrings auf, wie z. B. aus der DE 10 2012 216 080 A1 ersichtlich. An dem Verteilerring sind Brennstoffdüsen zum Einbringen des Brennstoffes in die Zufuhrdüsen, oder auch direkt in die Brennkammer, vorgesehen. Die Versorgung des Verteilerrings mit Brennstoff erfolgt unsymmetrisch über eine an einer Stelle des Verteilerrings angeschlossene Brennstoff-Zufuhrleitung. Um eine gleichmäßige Verteilung des Brennstoffes auf die Brennstoffdüsen und damit einen gleichmäßigen Verbrennungsprozess zu erreichen, der z. B. für die Einhaltung von Emissionsgrenzwerten erforderlich ist, ist in dem Verteilerring ein erhöhter Vordruck vorzusehen, d.h. ein gewisser Druckverlust in dem oder stromab des Verteilerrings, der z. B. an den Brennstoffdüsen oder an einem zusätzlich eingebrachten Lochblech abfallen kann. Der Brennstoff ist mit einem entsprechend hohen Vordruck zuzuführen, der über einen Brennstoffverdichter bereitgestellt wird. Dies führt zu einer Verringerung der Gesamteffizienz.

Weitere Brennkammern zum Einsatz in Gasturbinen sind in der EP 2 980 482 A1 und der WO 03/091626 A1 angegeben.

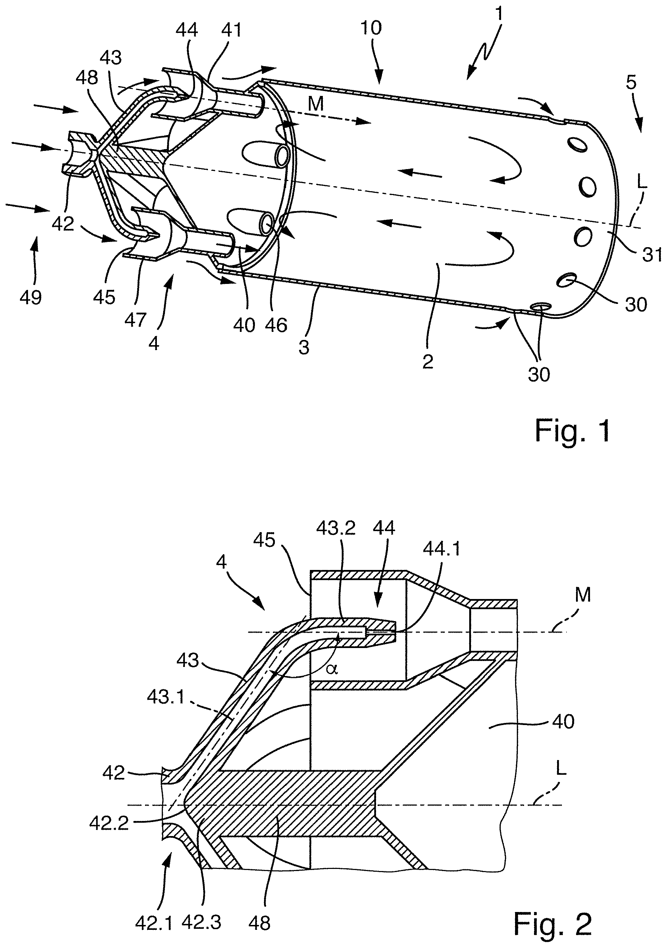

Die FR 2 289 740 A1 offenbart eine Brennkammer für Gasturbinentriebwerke. Die Brennkammer weist stirnseitig eine konusförmige Flammenrohrwand auf (vgl. Fig. 1). Die Wand dient dazu, eine optimal nutzbare Verdampferoberfläche zu bilden. Zufuhrdüsen sind in der Wand nicht eingebracht.

Die US 2016/0178206 A1 zeigt einen Injektor zum Einsatz z. B. in einer Gasturbine (vgl. Abs. [0002]). Der Injektor weist Vormischrohre 13 zur Vormischung von Luft mit Brennstoff auf. Für die Brennstoffzuführung ist ein Brennstoffverteilerrohr vorhanden. In dem Brennstoffverteilerrohr ist optional am stromabseitigen Ende ein konusförmiges Brennstoffleitelement vorhanden. Gewinkelte Zweigleitungen sind nicht vorhanden.

In der US 2015/089954 A1 ist ein Brennerkopf angegeben, der keine zentrale Brennstoffleitung mit einem auf der Längsachse liegendem Verteilerbereich und keine fingerartigen Zweigleitungen zum Verteilen des Brennstoffes auf die einzelnen Brennstoffdüsen zeigt.

Die US 2009/0277182 A1 zeigt einen Brennstoffinjektor mit Armen, die in Düsen münden. Die EP 2 085 696 A1, WO 2009/033000 A1 und US 2 768 197 A zeigen Brennerkopfkonzepte ohne Zweigleitungen zur Verteilung des Brennstoffes auf Zufuhrdüsen.

Der Erfindung liegt die Aufgabe zugrunde, einen Brennerkopf bereitzustellen, der eine effiziente Gaszufuhr in eine Brennkammer ermöglicht, sowie ein entsprechendes Brennersystem und dessen Verwendung in Verbindung mit einer Gasturbine.

Diese Aufgabe wird für den Brennerkopf durch die Merkmale des Anspruchs 1, für das Brennersystem durch die Merkmale des Anspruchs 11 und die Verwendung in Verbindung mit einer Gasturbine durch die Merkmale des Anspruchs 12 gelöst. Gemäß Anspruch 1 ist vorgesehen, dass die Zufuhrdüsen an einer (zufuhrseitig) mit der Brennkammer zu verbindenden Stirnwand befestigt sind, wobei insbesondere je eine Zufuhrdüse mit einem stromaufseitigen Ende in ein Luftplenum hineinragt.

Das stromaufseitige Ende kann z. B. zylinderförmig ausgebildet sein und bildet insbesondere eine Luftzufuhr. Eine vorteilhafte Strömungsführung ergibt sich, wenn sich stromab des stromaufseitigen Endes der Querschnitt zur Bildung einer Beschleunigungsstrecke verjüngt, z. B. über einen konischen axialen Bereich, und mit einem verjüngten, stromabseitigen Abschnitt durch die Stirnwand in die Brennkammer hineinragt. Der in die Brennkammer ragende Abschnitt ist vorzugsweise ebenfalls zylinderförmig ausgebildet, kann aber auch eine andere Form aufweisen.

Durch eine derartige Ausbildung ergeben sich flexiblere Optimierungsmöglichkeiten, insbesondere hinsichtlich der Formgebung, um die Stirnwand und die Zufuhrdüsen in Zusammenwirken mit der zentralen Brennstoffzufuhr jeweils strömungsoptimiert auszulegen, wobei die Auslegung weitgehend unabhängig voneinander erfolgen kann. Durch die Ausbildung der Brennstoffzufuhr mit den Zweigleitungen lässt sich die Brennstoffzugabe-Position durch entsprechende Auslegung der Zweigleitungen einfach an einer vorteilhaften Stelle innerhalb der Zufuhrdüsen festlegen. Zusätzlich ergibt sich vorteilhaft, z. B. auch bei einer verhältnismäßig großen axialen Ausdehnung der Zufuhrdüsen, ein geringerer Materialaufwand im Vergleich zu einer Einbringung der Zufuhrdüsen in einen Vollkörper, da die Stirnwand entsprechend dünnwandig ausgebildet sein kann. Es hat sich herausgestellt, dass sich der geringere Materialaufwand zusätzlich positiv auf den Verbrennungsprozess auswirkt: Durch die vergleichsweise geringe Materialmasse der Stirnwand weist diese eine geringere thermische Trägheit z. B. beim Hochfahren oder bei Lastwechseln auf als ein Vollkörper. Dadurch lassen sich stationäre Zustände der Betriebspunkte, mit den damit verbundenen geringeren Emissionen, vergleichsweise schnell erreichen. So bringt eine derartige Ausbildung neben der vorteilhaften strömungsoptimierbaren Ausgestaltung den zusätzlichen Vorteil eines verbesserten flexiblen Betriebs einer Brennkammer bzw. einer Gasturbinenanlage mit einem derartigen Brennerkopf mit sich.

Der Brennstoff wird über einen auf der Längsachse angeordneten zentralen Strömungsbereich auf die einzelnen Brennstoffdüsen aufgeteilt, ohne dass zuvor ein Verteilerkanal, insbesondere ein Verteilerring, mit asymmetrisch angeordneter Gesamtbrennstoffzuleitung durchströmt wird. Durch den zentral angeordneten Verteilerbereich ist eine definierte, gleichmäßige Brennstoffverteilung auf die einzelnen Brennstoffdüsen erreichbar, wobei auf einen hohen Druckverlust für eine Vergleichmäßigung der Brennstoffverteilung verzichtet werden kann. Gleichzeitig ergibt sich in Kombination mit den umlaufend angeordneten und in der Stirnwand befestigten Zufuhrdüsen eine geringere Versperrwirkung des zentralen Verteilerbereichs im Vergleich zu einem Verteilerkanal, insbesondere einem Verteilerring.

Die Zufuhröffnungen der Zufuhrdüsen können dabei auf einem Ring, insbesondere Kreisring, um die Längsachse relativ zu einem radialen Außenbereich einer anzuschließenden Brennkammer angeordnet sein, wobei auch mehrere Ringe mit verschiedenen Durchmessern möglich sind.

In einer vorteilhaften Ausgestaltungsvariante ist vorgesehen, dass die Zweigleitungen zumindest teilweise gleichartig ausgebildet sind, insbesondere bzgl. Länge, (Innen- und/oder Außen-) Durchmesser und/oder Krümmung, wobei auch Unterkombinationen dieser Parameter möglich sind. Möglich ist dabei, z. B. dass alle Zweigleitungen gleichartig ausgebildet sind oder z. B. auch, dass zwei oder mehr Gruppen von gleichartig ausgebildeten Zweigleitungen vorliegen, die sich in einem oder mehreren Parametern unterscheiden können (z. B. der Krümmung), aber dennoch auch gemeinsame Parameter aufweisen können (z. B. der Länge und/oder im Durchmesser). Dadurch ergeben sich im Wesentlichen vergleichbare Strömungsverhältnisse in den Zweigleitungen, insbesondere vergleichbare Druckverluste, was die gleichmäßige Brennstoffverteilung auf die einzelnen Leitungen begünstigt. Bevorzugt weisen alle oder zumindest Gruppen von mehreren Zweigleitungen einen gleichen Verlauf mit Richtungswechsel auf, um ähnliche Strömungsverhältnisse zu bewirken.

Vorzugsweise weist zumindest eine der Zweigleitungen in ihrem Verlauf mindestens einen Richtungswechsel auf, mit einem Abschnitt mit Richtungskomponente radial vom Verteilerbereich nach außen und einen darauffolgenden Abschnitt parallel zur Längsachse, wobei ein Winkel zwischen dem Abschnitt mit Richtungskomponente radial nach außen und dem darauffolgenden Abschnitt parallel zur Längsachse mehr als 90° beträgt. In Verbindung mit dem zentral angeordneten Verteilerbereich wird durch eine derartige Ausgestaltung der Zweigleitungen vorteilhaft der Druckverlust in den Zweigleitungen und auch in dem Übergang von dem Verteilerbereich in die Zweigleitungen verringert, wodurch sich der Gesamtdruckverlust bei der Brennstoffversorgung reduziert und ein effizienteres Gesamtsystem geschaffen wird. Die Verringerung des Druckverlustes wird durch die Ausbildung des Richtungswechsels in der Zweigleitung bewirkt, der durch den flachen Winkel von mehr als 90° strömungseffizient gestaltet ist. Dadurch ergibt sich auch ein entsprechend flacher Winkel im Übergang zwischen dem auf der Längsachse liegenden Verteilerbereich und den Zweigleitungen, da dieser Winkel aufgrund der parallelen Anordnung den Wechselwinkel zu dem Winkel des Richtungswechsels in der Zweigleitung bildet.

Die fingerartige Ausgestaltung mit einer gewissen Leitungslänge, z. B. mehr als drei Mal so lang wie der Leitungsaußendurchmesser, und einem zumindest einen Richtungswechsel aufweisenden Verlauf, ermöglicht ein genaues Zubringen des Brennstoffes an eine definierte Position zur Zugabe des Brennstoffes in die Brennluft. Auf diese Weise lässt sich der Verbrennungsprozess optimiert auslegen, z. B. hinsichtlich der Einmischung des Brennstoffes in die Brennluft.

Wenn dabei der Richtungswechsel durch eine Biegung in der/den Zweigleitung/en ausgeführt ist, führt dies zu einer günstigen Strömungsführung mit geringerem Druckverlust insbesondere gegenüber einer Ausführung, in der ein Knick vorgesehen ist. In Kombination tragen diese Merkmale zur Steigerung der Gesamteffizient einer Anordnung bei, in der der Brennerkopf mit dem Brennersystem eingesetzt wird, beispielsweise in einer Mikrogasturbine. Zu einer günstigen Strömungsführung trägt weiterhin bei, dass die Zweigleitungen jeweils einstückig, d. h. aus einem Stück, gefertigt sind. So kann eine glatte Leitungswandung ohne Übergänge, Schweißnähte oder dergleichen erreicht werden.

Vorzugsweise sind die Brennstoffdüsen am stromabseitigen Ende der Zweigleitungen angeordnet, wobei sich der Querschnitt der Zweigleitungen zur Mündung hin im Außendurchmesser verringert. Vorzugsweise sind dabei die Brennstoffdüsen einstückig aus den Zweigleitungen gebildet. Durch die Verringerung des Außendurchmessers ergibt sich eine konusartige Form der Brennstoffdüse mit einer möglichst spitzen Abschlusskante am Ende, wobei jedoch ausreichend viel Materialdicke verbleibt, um die mechanische Stabilität zu gewährleisten. Durch eine derartige Ausgestaltung lassen sich Rezirkulationsgebiete in der Strömung unmittelbar stromab der Brennstoffdüse verringern. In derartigen Rezirkulationsgebieten, in denen sich in der Regel Wirbel ausbilden, können Zonen mit hoher Aufenthaltszeit des Brennstoffes entstehen, die sich entzünden könnten und so zu einer Flamme in einem nicht erwünschten Bereich führen, die letztendlich zu einer Zerstörung des Brennersystems führen können. Durch die Verringerung von Rezirkulationsgebieten wird die Sicherheit des Brennersystems erhöht.

Wenn die Brennstoffdüsen einen gegenüber dem übrigen Leitungsdurchmesser (der Zweigleitungen) verkleinerten oder entsprechenden Innendurchmesser aufweisen, lässt sich die Einströmgeschwindigkeit des Brennstoffes in die Brennluft insbesondere entsprechend des gewählten Brennstoffes geeignet auslegen. Die Einströmgeschwindigkeit wirkt sich z. B. auf den Mischprozess zwischen Brennstoff und Brennluft aus, der den Verbrennungsprozess beeinflusst. Je nach Brennstoff oder anderen Parametern kann der Durchmesser entsprechend ausgelegt werden.

Eine gleichmäßige Brennstoffverteilung ist dadurch erreichbar, dass der Brennerkopf mit dem Verteilerbereich, und vorzugsweise mit den Zweigleitungen, symmetrisch, insbesondere mit drehsymmetrischem Querschnitt (orthogonal zur Längsachse L) ausgebildet ist, wobei die Symmetrieachse durch die Längsachse L gebildet ist. Dabei ist z. B. die Symmetrie derart, dass durch eine Drehung um 360° dividiert durch die Anzahl der Zweigleitungen der Querschnitt auf sich selbst abgebildet wird.

Wenn die Stirnwand entgegen der Anströmrichtung bezüglich eines Luftstroms im Betrieb, insbesondere eines Brennluft- und/oder Mischluftstroms, der ggf. bei Anströmung durch ein Luftplenum zunächst einen Gesamtluftstrom bildet, konisch verjüngt ist, lassen sich vorteilhaft Anströmverluste im Betrieb gegenüber einer flachen Ausführung der Stirnwand verringern. Vorzugsweise ist die konische Verjüngung radial über die gesamte Stirnwand, z. B. bis zu einem die Stirnwand außen abschließenden Ansatzbereich zur Montage an die Brennkammer, ausgebildet. Dies bringt insbesondere Vorteile, wenn der Brennerkopf für ein Brennersystem zum Einsatz mit Mischluft ausgebildet ist: Im Betrieb kann nach Aufteilung eines Gesamtluftstroms in Brennluft und Mischluft der Mischluftstrom verlustarm entlang der konischen Stirnwand an eine Außenseite einer Umfangswandung des Brennersystems geleitet werden. Durch die konische Verjüngung ergibt sich vorteilhaft auch ein strömungsgünstig geformter Übergangsbereich zwischen Stirnwand und der Außenseite der Umfangswandung, da der Winkel in der Strömungsführung größer 90° beträgt.

Wenn die Brennstoffzufuhr, d. h. die zentrale Brennstoffleitung mit Verteilerbereich, Zweigleitungen und Brennstoffdüsen, gegenüber den Zufuhrdüsen mittels einer Positioniervorrichtung definiert positioniert ist, lässt sich eine sichere Positionierung der Brennstoffdüsen und damit Mündungen innerhalb der Zufuhrdüsen sowohl in axialer als auch in radialer Richtung erreichen, sodass sich eine definierte Brennstoffzufuhrposition ergibt. Die Positioniervorrichtung kann vorteilhaft als ein zentrales, auf der Längsachse verlaufendes, z. B. im Querschnitt kreisförmiges, Stangenelement als Positionierelement zwischen dem Verteilerbereich und der Stirnwand ausgebildet sein, das eine Art Stütze bildet. Dabei ist es an dem Verteilerbereich und der Stirnwand befestigt, z. B. zumindest an einem dieser beiden Elemente einstückig angeformt. Diese Ausbildung erlaubt eine strömungsgünstige Verbindung der Brennstoffzufuhr mit der Stirnwand mit einfacher Positionierungsmöglichkeit zueinander, z. B. durch Wahl einer geeigneten Länge des Positionierelements, auch unter Berücksichtigung weiterer Ausgestaltungen des Brennerkopfes, z. B. den Verlauf der fingerartigen Zweigleitungen und der Ausbildung, insbesondere Formgebung, der Stirnwand. Möglich sind auch eine oder mehrere Positionierelemente zur Abstützung an einer anderen Stelle des Brennersystems, z. B. in einem Luftplenum.

Ein strömungsgünstiger Übergang von dem Verteilerbereich in die Zweigleitungen ist dadurch erreichbar, dass der Verteilerbereich an seinem stromabgelegenen, stirnseitigen Ende eine Abschlusswand mit einer sich gegen die Anströmrichtung verjüngenden Erhebung aufweist. Diese geht strömungstechnisch vorteilhaft zumindest in einer Längsschnittebene durch die Längsachse und die betreffende Zweigleitungsachse stetig in die Zweigleitungen über. Dadurch wird am stromabseitigen Ende der Brennstoffleitung ein gleichmäßiger, strömungsgünstiger Übergang zwischen dem Verteilerbereich und den Zweigleitungen erreicht, der einen geringeren Druckverlust als ein unstetiger Übergang aufweist. Der Verlauf der Zweigleitungen, bzw. der Innenwandungsbereiche der Zweigleitungen, die an den Verteilerbereich anschließen (zumindest die in Richtung Stirnwand weisenden Bereiche), setzt sich so zumindest bereichsweise stetig in den Verteilerbereich bis auf die Längsachse fort. Der Querschnitt der Erhebung (orthogonal zur Längsachse) kann z. B. derart ausgebildet sein, dass er einen Teil der Formgebung der inneren Umfangswandung der Zweigleitungen aufgreift und zumindest teilweise bis an die Längsachse weiterführt. So kann sich z. B. ein sternartiger, welliger oder mehreckiger Querschnitt ergeben, oder auch eine Konusform der Erhebung. Vorzugsweise entspricht der radial-axiale Wandungsverlauf der Erhebung zumindest teilweise dem radial-axialen Verlauf der an den Verteilerbereich anschließenden Abschnitte der Zweigleitungen (mit Richtungskomponente radial-axial vom Verteilerbereich nach außen), in die die Erhebung übergeht. In einer vorteilhaften Variante bildet die stirnseitige Abschlusswand des Verteilerbereichs gleichzeitig das stromauf angeordnete Ende des Positionierelements, wobei vorzugsweise der Verteilerbereich und das Positionierelement einstückig gefertigt sind. Wenn das Positionierelement ebenfalls einstückig in die Stirnwand übergeht, lässt sich ein strömungsgünstig geformter, montagefreundlicher Brennerkopf mit wenigen Einzelteilen bereitstellen, bei dem insbesondere die Brennstoffzufuhr bezüglich den Zufuhrdüsen definiert positioniert ist.

Für eine zumindest teilweise vorgemischte Zuführung von Brennstoff und Brennluft kann der Brennerkopf vorteilhafterweise mindestens eine Mischstufe umfassend mindestens eine der Brennstoffdüsen und eine diese umgebende Luftzufuhr der Zufuhrdüse in einer Luft-/ Brennstoffdüsenanordnung aufweisen. Dabei ist vorzugsweise mehreren Zufuhröffnungen, z. B. jeder einzelnen Zufuhröffnung, jeweils eine Mischstufe zugeordnet, sodass eine symmetrische Zufuhr von Frischgasen (Luft und Brennstoff) in den Brennraum möglich ist.

Dabei ist eine vorteilhafte Brennstoffzugabe dadurch erreichbar, dass die Mündung der Brennstoffdüse (d. h. der Zugabebereich von Brennstoff in die Brennluft) radial in einem Zentrumsbereich, insbesondere im Wesentlichen auf einer Mittellängsachse, der Zufuhrdüse zur Zugabe des Brennstoffes in die Brennluft außerhalb des Wandströmungsbereiches angeordnet ist. Dabei kann beispielsweise der Brennstoff in Hauptströmungsrichtung der Brennluft, z. B. koaxial, in die Luftzufuhr zugegeben werden, oder quer dazu in einer Art "Jet-in-Crossflow", mit einem Winkel zwischen Hauptströmungsrichtung von Brennstoff zu Brennluft zwischen 90° und 0°. Die Zugabe in den Zentrumsbereich hat den Vorteil, dass hier größere Strömungsgeschwindigkeiten vorliegen als im Wandströmungsbereich. Dadurch ergeben sich kürzere Aufenthaltszeiten des Brennstoffes in der Zufuhrdüse und die Gefahr von ungewolltem Flammenrückschlag in die und/oder ungewollter Selbstzündung in der Zufuhrdüse wird verringert, was wiederum die Zuverlässigkeit des Brennersystems erhöht. Bei einer Zugabe auf Höhe der Mittellängsachse sind eine gute Symmetrie und eine gleichmäßigere Verteilung des Brennstoffes in der Brennluft erreichbar. Dies begünstigt einen gleichmäßigen Verbrennungsprozess, bei dem lokal brennstoffreiche Gebiete und damit verbundene hohe Flammentemperaturen, die zu erhöhter Stickoxidbildung führen, vermieden werden. Zweckmäßigerweise kann stromab der Zugabestelle, d.h. Brennstoffdüse, eine gewisse Strecke bis zur Zufuhröffnung vorgesehen sein, auf der sich die beiden Gase zumindest teilweise vermischen können.

Bei der Mischstufe ist vorzugsweise die Mündung der Brennstoffdüse an einer axialen Position der Zufuhrdüse angeordnet, unmittelbar stromab oder stromauf derer die Luft-/ Brennstoffdüsenanordnung zur Beschleunigung der Brennluft ausgebildet ist, derart, dass der Brennstoff zu Beginn einer Beschleunigungsstrecke der Luftströmung oder stromab davon in die bereits beschleunigende oder beschleunigte Luftströmung zugegeben wird. Die Beschleunigung ist beispielsweise dadurch erreichbar, dass die Zufuhrdüse eine, z. B. konische, Querschnittsverengung aufweist. Auch ein Querschnittssprung wäre möglich. "Unmittelbar stromab" bedeutet, dass ab (bei einer kontinuierlichen Verengung) oder an (bei einer sprunghaften Verengung) dieser Position auch die beschleunigte Brennluftführung beginnt. Der Brennstoff kann so zu Beginn einer Beschleunigungsstrecke der Luftströmung oder auch stromab davon in die bereits beschleunigende oder beschleunigte Luftströmung zugegeben werden. Dadurch wird ein Bereich hoher Geschwindigkeiten an und/oder stromab der Brennstoffzugabe-Position erreicht, wodurch sich die Gefahr von Flammenrückschlag an die Brennstoffdüse verringern und die Zuverlässigkeit des Brennersystems erhöhen lässt.

Bei dem erfindungsgemäßen Brennersystem mit einer Brennkammer und einem Brennerkopf gemäß einer der beanspruchten Ausgestaltungsvarianten ist der Brennerkopf stirnseitig der Brennkammer angeordnet. Dabei kann der Brennerkopf und die Brennkammer für einen einstufigen Verbrennungsprozess ausgelegt sein.

Besonders vorteilhaft lässt sich das erfindungsgemäße Brennersystem mit dem erfindungsgemäßen Brennerkopf in Verbindung mit einer ausgangsseitig der Brennkammer angeschlossenen Turbine verwenden, insbesondere in Ausbildung als Mikrogasturbine. Derartige Mikrogasturbinenanlagen können beispielsweise als dezentrale Kraftwerke mit Kraft-Wärme-Kälte-Kopplung eingesetzt werden, z. B. als kleine Anlagen für die private Versorgung von Ein- und Mehrfamilienhäusern oder auch in gewerblichem und industriellem Bereich, auch zur Erzeugung von Prozessdampf, Prozesswärme (Thermoöl z. B. in Bäckereien), zur Klimatisierung oder dergleichen. Wie sich aus Untersuchungen der Erfinder ergeben hat, kann das System bei Drücken unterhalb von 6 bar vorteilhaft angewandt werden, insbesondere auch bei im wesentlichen Atmosphärendruck, beispielsweise bei subatmosphärischen Mikrogasturbinenanlagen, wobei der Anwendungsbereich nicht auf diesen Druckbereich beschränkt ist. Bei Mikrogasturbinenanlagen wird das Brennersystem typischerweise unter mageren Bedingungen, d. h. bei Sauerstoffüberschuss in der Verbrennung, betrieben. Typische Vorwärmtemperaturen der Luft können beispielsweise zwischen Umgebungsbedingungen und 850°C, z. B. bis 750°C, liegen, wobei die Luft zur Effizienzsteigerung der Anlage durch einen in der Anlage vorgesehenen Wärmetauscher (Rekuperator) vorgewärmt sein kann.

Nachfolgend wird die Erfindung anhand eines Ausführungsbeispiels unter Bezugnahme auf die Zeichnungen näher erläutert. Es zeigen:
- Fig. 1: eine Schnittdarstellung durch ein Brennersystem mit einem Brennerkopf und einer Brennkammer in perspektivischer Ansicht und
- Fig. 2: eine Schnittdarstellung eines Teils des Brennerkopfes mit Stirnwand gemäß Fig. 1 in seitlicher Ansicht.

Fig. 1 zeigt in einer Schnittdarstellung ein Brennersystem 1 mit einem Brennerkopf 4 und einer Brennkammer 10, die einen mit einer Umfangswandung 3 umgebenen Brennraum 2 umfasst. Ein Teil des Brennerkopfes 4 ist in Fig. 2 vergrößert dargestellt. Das Brennersystem 1 und der Brennerkopf 4 erstrecken sich im Wesentlichen entlang einer Längsachse L, die in der gezeigten Ausführung ebenfalls die Symmetrieachse darstellt. Der Brennerkopf 4 weist für die Zufuhr von zu verbrennenden Frischgasen, d. h. Brennluft und Brennstoff, Zufuhröffnungen 46 auf, die gleichmäßig umlaufend auf einem gedachten Ring in einer eingangsseitigen Stirnwand 40 angeordnet sind. Der Ring, insbesondere Kreisring, auf dem die Zufuhröffnungen 46 angeordnet sind, befindet sich im äußeren Bereich der Stirnwand 40, sodass der radiale Abstand der Zufuhröffnungen 46 (bezüglich ihrer Mittelpunkte) zu der Umfangswandung 3 geringer ist als zu der Längsachse L.

Die Zufuhröffnungen 46 sind, für eine teilweise vorgemischte Zufuhr von Brennluft und Brennstoff, Luft-/Brennstoffdüsenanordnungen 41 zugeordnet, die jeweils eine Mischstufe aufweisen. Dabei ragt je eine Zufuhrdüse 47 mit einem durch einen Zylinderabschnitt gebildeten stromaufseitigen Ende in ein Luftplenum 49 hinein und bildet so eine Luftzufuhr 45. Stromab der Luftzufuhr 45 verjüngt sich der Querschnitt des Zylinderabschnitts zur Bildung einer Beschleunigungsstrecke über einen konischen axialen Bereich und ragt mit einem verjüngten, stromabseitigen Abschnitt durch die Stirnwand 40 in die Brennkammer 10 hinein. Der in die Brennkammer 10 ragende Abschnitt ist ebenfalls zylinderförmig ausgebildet, kann aber auch eine andere Form aufweisen. Die Zufuhrdüsen 47 erstrecken sich entlang von Mittellängsachsen M, die parallel zur Längsachse L ausgerichtet sind, sodass die Brennluft axial in die Brennkammer 10 eingedüst wird.

In jeweils eine Zufuhrdüse 47 hinein ragt eine Zweigleitung 43 einer fingerartigen Leitungsanordnung. Die Zweigleitung 43 geht fingerartig von einem Verteilerbereich 42.1 einer zentralen Brennstoffleitung 42 ab und ist für eine genaue Zuführung des Brennstoffes von der zentralen Brennstoffleitung 42 radial mittig in die Zufuhrdüse 47 mit einem Richtungswechsel, hier für eine günstige Strömungsführung gebogen, ausgeführt. Dabei weist die Zweigleitung 43 einen von dem Verteilerbereich 42.1 ausgehenden Abschnitt 43.1 auf, der mit radialer und axialer Richtungskomponente nach außen verläuft. Mit einem sich dadurch ergebendem Winkel α von mehr als 90° geht die Zweigleitung 43 anschließend in einen Abschnitt 43.2 über, der parallel zur Längsachse L verläuft. Der Übergang ist, ebenso wie der Übergang aus dem Verteilerbereich 42.1, gerundet bzw. gebogen ausgeführt, sodass sich insgesamt ein stetiger und somit strömungsgünstiger Leitungsverlauf ergibt. Die Zweigleitung 43 mündet in einer Brennstoffdüse 44, die unmittelbar stromauf des verjüngten Abschnitts, mit einer Mündung unmittelbar zu Beginn der Beschleunigungsstrecke, positioniert ist. Im Bereich der Brennstoffdüse 44 verringert sich der Außendurchmesser der Zweigleitung 43 zur Bildung einer möglichst spitzen Abschlusskante 44.1 (vgl. Fig. 2), um Rezirkulationszonen bzw. Totwasserzone im Nachlauf der Brennstoffdüse 44 mit einer verlängerten Aufenthaltszeit des Brennstoffes zu vermindern. Der Brennstoff kann so koaxial in die einströmende Brennluft gegeben werden, wobei unmittelbar stromab der Brennstoff-Zugabeposition die Brennluft durch die Querschnittsverengung beschleunigt wird. Bis zu der Zufuhröffnung 46 kann eine Teil-Vormischung von Brennstoff und Brennluft stattfinden. Möglich wäre auch eine andere Luft-/Brennstoffdüsenanordnung 41, wobei auch auf eine Vormischung gänzlich verzichtet werden könnte.

Die Zweigleitungen 43 werden aus der zentralen Brennstoffleitung 42 als Brennstoffzuführung mit dem zentralen, d. h. auf der Längsachse L liegenden, Verteilerbereich 42.1 gespeist, sodass sich eine symmetrische Anordnung der Brennstoffzufuhr ergibt, bei der nicht explizit ein Brennstoffplenum vorgesehen ist. Dadurch kann auf einen hohen Druckverlust zur gleichmäßigen Verteilung des Brennstoffes, wie in der Regel bei Ausführungen mit Brennstoffplenum vorgesehen, verzichtet werden.

Der Verteilerbereich 42.1 weist an seinem stromabgelegenen, stirnseitigen Ende eine Abschlusswand 42.2 mit einer gegen die Anströmrichtung weisenden Erhebung 42.3 auf, die in die Zweigleitungen 43 übergeht. Die Erhebung 42.3 ist auf die Längsachse L zulaufend ausgebildet und weist vorliegend eine abgerundete Spitze auf. Der radial-axiale Wandungsverlauf der Erhebung 42.3 greift dabei den radial-axialen Verlauf der Zweigleitungen 43 auf, genauer den der Abschnitte 43.1, die von dem Verteilerbereich 42.1 abgehen. Durch diese Ausbildung geht der Verteilerbereich 42.1 über die Abschlusswand 42.2 stetig in die Abschnitte 43.1 über, zumindest in die Innenwandungsbereiche der Abschnitte 43.1, die unmittelbar an die Abschlusswand 42.2 anschließen (diejenigen Bereiche, die in Richtung Stirnwand 40 weisen). So wird erreicht, dass sich der Verlauf der Zweigleitungen 43, bzw. deren entsprechende Innenwandungsbereiche, zumindest bereichsweise in den Verteilerbereich 42.1 stetig im Wesentlichen bis auf die Längsachse L fortsetzt. Diese Gestaltung trägt ebenfalls zu einer druckverlustarmen Strömungsführung und somit Steigerung der Gesamteffizienz bei.

Die zentrale Brennstoffleitung 42 wiederum kann an einer Zuleitung des Brennstoffes aus dem Brennstoffverdichter lösbar angeschlossen sein, beispielsweise über eine Schraubverbindung (hier nicht dargestellt). Dies erlaubt eine einfache Montage bzw. Demontage des Brennerkopfes 4.

Bezüglich der Brennkammer 10 bzw. der Stirnwand 40 ist die Anordnung zur Brennstoffzufuhr mit der Brennstoffleitung 42 und den fingerartigen Zweigleitungen 43 über ein Positionierelement 48 als Positioniervorrichtung in Position gebracht. Dieses ist vorliegend stangenartig zentral ausgebildet, kann aber auch anders ausgeführt sein und/oder mehrere Elemente aufweisen. Das Positionierelement 48 ist einstückig an die Brennstoffleitung 42 angeformt und bildet mit seinem stromaufseitigen Ende die Abschlusswand des Verteilerbereichs 42.1. An seinem stromabseitigen Ende geht das Positionierelement 48 in die Stirnwand 40 über.

Die Stirnwand 40 ist entgegen der Anströmrichtung bezüglich der Brennluft konisch verjüngt, um den Anströmverlust im Betrieb gegenüber einer flachen Ausführung zu verringern. Möglich ist auch eine andere Ausgestaltung der Stirnwand 40, z. B. flach in einer Ebene orthogonal zur Längsachse L angeordnet.

Die Umfangswandung 3 der Brennkammer 10 besitzt eine im Wesentlichen zylindrische Innenumfangsfläche und weist entsprechend einen kreiszylindrischen Querschnitt auf. Sie erstreckt sich längs um die Längsachse L, die vorliegend zugleich die Symmetrieachse des Brennersystems 1 bildet. Im ausgangsseitigen Endbereich der Brennkammer 10 sind rundum in der Umfangswandung 3 verteilt Mischluftöffnungen 30 zum Zuführen von Mischluft in das verbrannte, aus der Brennkammer 10 strömende Abgas eingebracht. Diese sind vorliegend in einer Reihe ringartig, radial gleichmäßig um die Umfangswandung 3 verteilt und im Einzelnen als Kreisbohrungen ausgeführt, wobei andere Öffnungsformen und auch andere Anordnungen möglich sind.

Stromab der Mischluftöffnungen 30, an der der Stirnwand 40 gegenüberliegenden Seite der Brennkammer 10, ist eine ausgangsseitige Ausströmöffnung 31 zum Austritt der verbrannten Abgase aus der Brennkammer 10 vorgesehen. Stromab an die Ausströmöffnung 31 schließt sich ein Abgasbereich 5 an (hier nicht dargestellt), der die verbrannten Abgase weiterleitet, beispielsweise in Richtung einer stromab angeschlossenen Turbine. In dem Abgasbereich 5 finden keine Verbrennungsreaktionen mehr statt, wobei Nachreaktionen im Abgas nicht ausgeschlossen sind. Die Ausströmöffnung 31 ist derart dimensioniert, dass ihr Radius mindestens so groß ist wie der radiale Abstand der hier ringförmig angeordneten Zufuhröffnungen 46 von der Längsachse L (bezüglich der Mitte der Zufuhröffnungen 46). Vorliegend entspricht der Radius der Ausströmöffnung 31 dem Radius eines Querschnitts des Brennraums 2. Es wird somit auf eine Querschnittsänderung innerhalb der Brennkammer 10, insbesondere auf eine Verjüngung, verzichtet. Dies bringt wesentliche Vereinfachungen bei der Fertigung der Umfangswandung 3. Möglich wäre auch eine Querschnittsänderung, z. B. in vorgenannter Weise, wodurch z. B. eine erhöhte mechanische Stabilität erreichbar wäre. Auch ist nicht ausgeschlossen, dass weiter stromab, als Übergang auf eine nachfolgende Komponente, insbesondere eine Turbine, eine Querschnittsänderung vorgesehen ist. Diese beeinflusst jedoch nicht in unmittelbarer Weise die Strömungsführung in der Brennkammer 10.

Im Betrieb wird dem Brennersystem 1 Luft durch das Luftplenum 49 zugegeben, die auch andere Bestandteile, z. B. extern rezirkuliertes Abgas oder Prozessgase, aufweisen könnte. In Fig. 1 ist die Luftführung durch Pfeile angedeutet. Die Luft teilt sich gemäß einem bestimmten Verhältnis, das durch die Geometrie festgelegt ist, in einen Mischluftanteil und einen Brennluftanteil auf. Die Mischluft wird entlang der Stirnwand 40 und der Außenseite der Umfangswandung 3 geleitet, wobei die Strömungsführung durch die konische Verjüngung der Stirnwand 40 widerstandsarm gestaltet ist. Die die Brennkammer 10 umströmende Mischluft kühlt die Stirnwand 40 und die Umfangswandung 3 insbesondere konvektiv.

Die restliche Luft gelangt als Brennluft durch die Luftzufuhren 45 in die Luft-/Brennstoffdüsenanordnungen 41. Hier wird Brennstoff koaxial zur Hauptströmungsrichtung der Brennluft in die Zufuhrdüsen 47 unmittelbar stromauf der Querschnittsverengungen zugegeben, sodass über die durch die Querschnittsverengungen gebildeten Beschleunigungsstrecken die Brennluft mit dem zugegebenen Brennstoff beschleunigt wird. Bis zu den Austrittsöffnungen 46 erfolgt eine teilweise Vermischung von Brennluft und Brennstoff. Dieses Gemisch wird nun der Brennkammer 10 zugeführt, entzündet sich dort und wird in der Verbrennungszone verbrannt. In dem Brennraum 2 bildet sich eine Rezirkulationsströmung mit einer inneren Rezirkulation der verbrannten Abgase aus, durch die ein Teil der verbrannten Abgase wieder in einen Bereich stromauf der Verbrennungszone zurückgeführt wird und sich in die noch unverbrannten Frischgase einmischt (in der Figur durch Pfeile angedeutet). Auf diese Weise wird die Verbrennungstemperatur reduziert. Die verhältnismäßig weit außen angeordneten Zufuhröffnungen 46 begünstigen dabei eine im Wesentlichen nach innen gerichtete Rezirkulation, sodass die zurückströmenden Abgase in einer inneren Rezirkulationszone, umgeben von der ringförmigen Verbrennungszone, zurückströmen, d. h. näher an der Längsachse L vorbei als die verbrennenden Gase. Durch die im Wesentlichen innere Rezirkulation wird eine kompakte Strömungsführung erreicht, wodurch wiederum die Brennkammer 10 insbesondere bezüglich ihrer Länge kompakt ausgelegt werden kann.

Der Brennerkopf 4 und die Brennkammer 10 sind derart ausgelegt, dass die Verbrennungs- und Rezirkulationszone stromauf der Mischluftöffnungen 30 gelegen sind. Die durch die Mischluftöffnungen 30 zugegebene Mischluft mischt sich im Wesentlichen in das in Richtung stromab in den Abgasbereich 5 strömende Abgas ein und kühlt dieses. Ein Teil der Mischluft kann jedoch durch die Rezirkulation erfasst werden und in Richtung Brennerkopf 4 transportiert werden.

Der Brennerkopf 4 und die Brennkammer 10 sind derart ausgelegt, dass sich eine Rezirkulationsrate von kleiner 1,5, bevorzugt kleiner 1, beispielsweise 0,4 bis 0,8 ergibt. Diese Rezirkulationsrate erlaubt eine über einen weiten Betriebsbereich stabile Verbrennung, wobei die Emissionsgrenzwerte eingehalten werden können. Beeinflussend auf die Rezirkulationsrate wirkt sich beispielsweise die Geschwindigkeit des Frischgases bei Zugabe in die Brennkammer 10 aus, die bei derartigen Rezirkulationsraten entsprechend geringer gewählt werden kann als im Betrieb der flammenlosen Oxidation. Beispielhafte Werte liegen um 80 m/s bis 100 m/s, beispielsweise 90 m/s, wobei die Geschwindigkeit jedoch stark u.a. vom Betriebspunkt abhängig ist und daher variieren kann. Derartige Rezirkulationsraten lassen sich durch die vorliegend beschriebene Geometrie, insbesondere die Dimensionierung der Ausströmöffnung 31, erreichen, wobei auf eine Verjüngung zur Unterstützung der Rezirkulation verzichtet werden kann. Eine Unterstützung der Rezirkulation wird durch die Zugabe der Mischluft durch die Mischluftöffnungen 30 stromab der Verbrennungszone erreicht, die einen gewissen Gegendruck aufbaut. Daher ist der axiale Abstand der Mischluftöffnungen 30 von der Stirnwand 40 derart ausgelegt, dass sie gerade stromab der Rezirkulationsströmung liegen und die Mischluft nicht bzw. zu einem geringen Anteil in die Rezirkulation mit einbezogen wird. Auf diese Weise ergibt sich zugleich eine Anordnung der Mischluftöffnungen 30 möglichst weit stromauf, sodass das nicht an der Rezirkulation teilnehmende Abgas möglichst früh verdünnt und heruntergekühlt werden kann, um eine unnötige hohe thermische Materialbelastung zu vermeiden. Die Positionierung der Mischluftöffnungen 30 orientiert sich somit an der axialen Ausdehnung der Rezirkulationsströmung.

Im Übergang zwischen der Brennkammer 10 und dem Abgasbereich 5 kann eine Änderung der Querschnittsgeometrie vorgesehen sein, wobei jedoch die Ausströmöffnung 31 die definierte Mindestgröße (Radius mindestens so groß ist wie der radiale Abstand der hier ringförmig angeordneten Zufuhröffnungen 46 von der Längsachse L, bezüglich der Mitte der Zufuhröffnungen 46) aufweist. Zusätzlich oder alternativ können für die Brennkammer 10 und den Abgasbereich 5 verschiedene Materialien verwendet oder diese einstückig aus einem Material gestaltet sein. Bei der einstückigen Gestaltung ohne die Geometrie- und/oder Materialänderung kann der Übergang zwischen der Brennkammer 10 und dem Abgasbereich 5 als stromab der Mischluftöffnungen 30 gelegen definiert werden, in dem axialen Bereich, ab dem das Abgas-Mischluft-Gemisch im Wesentlichen stromab strömt.

Der in dem Ausführungsbeispiel beschriebene Brennerkopf 4 ist auch in anderen Brennersystemen 1 vorteilhaft einsetzbar, wobei beispielsweise eine anders gestaltete Brennkammer 10 mit ggf. anderen Strömungsverhältnissen in der und/oder außerhalb der Brennkammer 10, z. B. der Luftzuleitung an die Brennkammer 10, vorliegen können. Dabei trägt der Brennerkopf 4 zu einer definierten und effizienten Brennstoffzufuhr und damit zu einer Steigerung der Gesamteffizient z. B. einer Mikrogasturbinenanordnung bei.

## Patentansprüche

1. Brennerkopf (4) zur Verwendung in einer Gasturbinenanlage zur Zufuhr von Brennluft und Brennstoff in eine Brennkammer (10) eines Brennersystems (1), wobei der Brennerkopf (4) zur Zufuhr der Brennluft um eine Längsachse (L) angeordnete Zufuhrdüsen (47) mit Zufuhröffnungen (46) zur Anordnung an der Brennkammer (10) umfasst, wobei sich die Zufuhrdüsen (47) im äußeren Bereich einer Stirnwand (40) befinden, sodass der radiale Abstand der Zufuhröffnungen (46) bezüglich ihrer Mittelpunkte zu dem äußeren Umfang der Stirnwand (40) geringer ist als zu der Längsachse (L), und wobei zumindest zweien der Zufuhrdüsen (47) je eine Brennstoffdüse (44) zur Zufuhr von Brennstoff zugeordnet ist,
**dadurch gekennzeichnet, dass**
dem Brennerkopf (4) zur Brennstoffversorgung eine zentrale Brennstoffleitung (42) mit einem auf der Längsachse (L) liegenden Verteilerbereich (42.1) zum Verteilen von Brennstoff auf die Brennstoffdüsen (44) zugeordnet ist, wobei von dem Verteilerbereich (42.1) fingerartige Zweigleitungen (43) zum Verteilen des Brennstoffes auf die einzelnen Brennstoffdüsen (44) abgehen,
dass die Zufuhrdüsen (47) an einer mit der Brennkammer (10) zu verbindenden Stirnwand (40) befestigt sind,
dass zumindest eine der Zweigleitungen (43) in ihrem Verlauf mindestens einen Richtungswechsel aufweist, mit einem Abschnitt (43.1) mit Richtungskomponente radial vom Verteilerbereich (42.1) nach außen und einen darauffolgenden Abschnitt (43.2) parallel zur Längsachse (L), wobei ein Winkel (α) zwischen dem Abschnitt (43.1) mit Richtungskomponente radial nach außen und dem darauffolgenden Abschnitt (43.2) parallel zur Längsachse (L) mehr als 90° beträgt, dass die Stirnwand (40) entgegen der Anströmrichtung bezüglich eines Luftstroms im Betrieb konisch verjüngt ist und
dass eine Brennstoffzufuhr, umfassend die zentrale Brennstoffleitung (42) mit dem Verteilerbereich (42.1), die Zweigleitungen (43) und die Brennstoffdüsen (44), gegenüber den Zufuhrdüsen (47) mittels einer Positioniervorrichtung (48) definiert positioniert ist, wobei die Positioniervorrichtung (48) als zentrales, auf der Längsachse (L) verlaufendes Stangenelement zwischen dem Verteilerbereich (42.1) und der Stirnwand (40) ausgebildet ist.

2. Brennerkopf (4) nach Anspruch 1,
**dadurch gekennzeichnet,**
**dass** die Zweigleitungen (43) zumindest teilweise gleichartig ausgebildet sind, insbesondere bzgl. Länge, Durchmesser und/oder Krümmung.

3. Brennerkopf (4) nach Anspruch 1 oder 2,
**dadurch gekennzeichnet,**
**dass** der Richtungswechsel durch eine Biegung der Zweigleitung (43) ausgeführt ist, wobei insbesondere die Zweigleitungen (43) jeweils einstückig gefertigt sind.

4. Brennerkopf (4) nach einem der vorhergehenden Ansprüche,
**dadurch gekennzeichnet,**
**dass** die Brennstoffdüsen (44) am stromabseitigen Ende der Zweigleitungen (43) angeordnet sind, wobei sich der Querschnitt der Zweigleitungen (43) zur Mündung hin im Außendurchmesser verringert.

5. Brennerkopf (4) nach einem der vorhergehenden Ansprüche,
**dadurch gekennzeichnet,**
**dass** die Brennstoffdüsen (44) einen gegenüber dem übrigen Leitungsdurchmesser verkleinerten oder entsprechenden Innendurchmesser aufweisen.

6. Brennerkopf (4) nach einem der vorhergehenden Ansprüche,
**dadurch gekennzeichnet,**
**dass** der Brennerkopf (4) mit dem Verteilerbereich (42.1), und vorzugsweise mit den Zweigleitungen (43), symmetrisch, insbesondere mit drehsymmetrischem Querschnitt, ausgebildet ist, wobei die Symmetrieachse durch die Längsachse (L) gebildet ist.

7. Brennerkopf (4) nach einem der vorhergehenden Ansprüche,
**dadurch gekennzeichnet,**
**dass** der Verteilerbereich (42.1) an seinem stromabgelegenen, stirnseitigen Ende eine Abschlusswand (42.2) mit einer sich gegen die Anströmrichtung radial verjüngenden Erhebung (42.3) aufweist, die in die Zweigleitungen (43) übergeht.

8. Brennerkopf (4) nach einem der vorhergehenden Ansprüche,
**dadurch gekennzeichnet,**
**dass** der Brennerkopf (4) für eine zumindest teilweise vorgemischte Zuführung von Brennstoff und Brennluft mindestens eine Mischstufe umfassend mindestens eine der Brennstoffdüsen (44) und eine diese umgebende Luftzufuhr (45) der Zufuhrdüse (47) in einer Luft-/ Brennstoffdüsenanordnung (41) aufweist.

9. Brennerkopf (4) nach einem der vorhergehenden Ansprüche,
**dadurch gekennzeichnet,**
**dass** die Mündung der Brennstoffdüse (44) radial in einem Zentrumsbereich, insbesondere im Wesentlichen auf einer Mittellängsachse (M) der Zufuhrdüse (47), zur Zugabe des Brennstoffes in die Brennluft außerhalb des Wandströmungsbereiches angeordnet ist.

10. Brennerkopf (4) nach einem der vorhergehenden Ansprüche,
**dadurch gekennzeichnet,**
**dass** die Mündung der Brennstoffdüse (44) an einer axialen Position der Zufuhrdüse (47) angeordnet ist, unmittelbar stromab oder stromauf derer die Luft-/ Brennstoffdüsenanordnung (41) zur Beschleunigung der Brennluft ausgebildet ist, derart, dass der Brennstoff zu Beginn einer Beschleunigungsstrecke der Luftströmung oder stromab davon in die bereits beschleunigende oder beschleunigte Luftströmung zugegeben wird.

11. Brennersystem (1) mit einer Brennkammer (10) und einem Brennerkopf (4) nach einem der vorhergehenden Ansprüche zur Zufuhr von Brennluft und Brennstoff in die Brennkammer (10), wobei der Brennerkopf (4) stirnseitig der Brennkammer (10) angeordnet ist.

12. Verwendung eines Brennersystems (1) nach Anspruch 11 in Verbindung mit einer ausgangsseitig der Brennkammer (10) angeschlossenen Turbine, insbesondere in Ausbildung als Mikrogasturbine.

## Claims

1. Burner head (4) for use in a gas turbine system for supplying combustion air and fuel into a combustion chamber (10) of a burner system (1), the burner head (4) for supplying the combustion air comprising supply nozzles (47) which are arranged about a longitudinal axis (L) and have supply openings (46) for arrangement on the combustion chamber (10), the supply nozzles (47) being located in the outer region of an end wall (40) such that the radial distance of the centers of the supply openings (46) to the outer circumference of the end wall (40) is smaller than to the longitudinal axis (L), a fuel nozzle (44) for supplying fuel being assigned to each of at least two of the supply nozzles (47), **characterized in that** a central fuel line (42) which comprises a distributor region (42.1) located on the longitudinal axis (L) for distributing fuel to the fuel nozzles (44) is assigned to the burner head (4) for the purpose of supplying fuel, finger-like branch lines (43) for distributing the fuel to the individual fuel nozzles (44) branching off from the distributor region (42.1), **in that** the supply nozzles (47) are attached to an end wall (40) which is to be connected to the combustion chamber (10), **in that** at least one of the branch lines (43) has at least one change of direction in its course, comprising a portion (43.1) which has a direction component that is radially outwards from the distributor region (42.1) and a subsequent portion (43.2) parallel to the longitudinal axis (L), an angle (α) between the portion (43.1) comprising a radially outward direction component and the following portion (43.2) parallel to the longitudinal axis (L) being more than 90°, **in that** the end wall (40) is conically tapered against the inflow direction with respect to an air flow during operation, and **in that** a fuel supply comprising the central fuel line (42), which comprises the distributor region (42.1), the branch lines (43) and the fuel nozzles (44), is positioned in a defined manner opposite the supply nozzles (47) by means of a positioning device (48), the positioning device (48) being designed as a central rod element between the distributor region (42.1) and the end wall (40), which element extends on the longitudinal axis (L).

2. Burner head (4) according to claim 1, **characterized in that** the branch lines (43) are at least partially of the same design, in particular with respect to length, diameter and/or curvature.

3. Burner head (4) according to either claim 1 or claim 2, **characterized in that** the change of direction is carried out by means of a bend in the branch line (43), each of the branch lines (43) in particular being manufactured in one piece.

4. Burner head (4) according to any of the preceding claims, **characterized in that** the fuel nozzles (44) are arranged at the downstream end of the branch lines (43), the cross section of the branch lines (43) decreasing in the outer diameter towards the mouth.

5. Burner head (4) according to any of the preceding claims, **characterized in that** the fuel nozzles (44) have an inner diameter which is smaller than or corresponds to the remaining line diameter.

6. Burner head (4) according to any of the preceding claims, **characterized in that** the burner head (4) comprising the distributor region (42.1), and preferably comprising the branch lines (43), is symmetrical, in particular has a rotationally symmetrical cross section, the axis of symmetry being formed by the longitudinal axis (L).

7. Burner head (4) according to any of the preceding claims, **characterized in that**, at its downstream end face, the distributor region (42.1) has a closure wall (42.2) which has a raised portion (42.3) which tapers radially against the inflow direction and transitions into the branch lines (43).

8. Burner head (4) according to any of the preceding claims, **characterized in that**, for an at least partially premixed supply of fuel and combustion air, the burner head (4) has at least one mixing stage comprising at least one of the fuel nozzles (44) and a surrounding air supply (45) of the supply nozzle (47) in an air/fuel nozzle arrangement (41).

9. Burner head (4) according to any of the preceding claims, **characterized in that** the mouth of the fuel nozzle (44) is radially arranged in a central region, in particular substantially on a central longitudinal axis (M) of the supply nozzle (47), in order to add the fuel into the combustion air outside the wall flow region.

10. Burner head (4) according to any of the preceding claims, **characterized in that** the mouth of the fuel nozzle (44) is arranged in an axial position of the supply nozzle (47), immediately downstream or upstream of which the air/fuel nozzle arrangement (41) is designed to accelerate the combustion air such that the fuel is added to the already accelerating or accelerated air flow at the beginning of an acceleration path of the air flow or downstream thereof.

11. Burner system (1) comprising a combustion chamber (10) and a burner head (4) according to any of the preceding claims, for supplying combustion air and fuel into the combustion chamber (10), wherein the burner head (4) is arranged on the end face of the combustion chamber (10).

12. Use of a burner system (1) according to claim 11 in conjunction with a turbine, in particular in the form of a micro gas turbine, which is connected to the combustion chamber (10) on the output side.

## Revendications

1. Tête de brûleur (4) destinée à être utilisée dans une installation de turbine à gaz pour acheminer l'air de combustion et le combustible dans une chambre de combustion (10) d'un système de brûleur (1), la tête de brûleur (4) destinée à l'acheminement de l'air de combustion comprenant des buses d'alimentation (47) disposées autour d'un axe longitudinal (L) et présentant des ouvertures d'alimentation (46) destinées à être disposées au niveau de la chambre de combustion (10), les buses d'alimentation (47) se trouvant dans la zone extérieure d'une paroi frontale (40), de sorte que la distance radiale des ouvertures d'alimentation (46) par rapport à leurs centres, par rapport à la périphérie extérieure de la paroi frontale (40) soit inférieure à la distance par rapport à l'axe longitudinal (L), une buse de combustible (44) étant associée à chacune d'au moins deux buses d'alimentation (47) pour acheminer le combustible, **caractérisée en ce qu'**
une conduite de combustible centrale (42) est associée à la tête de brûleur (4) pour l'alimentation en combustible, ladite conduite de combustible centrale comportant une zone de répartition (42.1) située sur l'axe longitudinal (L), laquelle zone de répartition est destinée à la répartition de combustible sur les buses de combustible (44), des conduites de dérivation (43) en forme de doigts partant de la zone de répartition (42.1) pour répartir le combustible sur les buses de combustible (44) individuelles,
**en ce que** les buses d'alimentation (47) sont fixées à une paroi frontale (40) destinée à être reliée à la chambre de combustion (10),
**en ce que** l'au moins une des conduites de dérivation (43) en forme de doigts présente au moins un changement de direction dans son parcours, une section (43.1) comportant des composantes directionnelles radiales par rapport à la zone de répartition (42.1) vers l'extérieur et une section suivante (43.2) parallèle à l'axe longitudinal (L), un angle (α) entre la section (43.1) comportant des composantes directionnelles radiales vers l'extérieur et la section suivante (43.2) parallèle à l'axe longitudinal (L) étant de plus de 90 °, **en ce que** la paroi frontale (40) est rétrécie coniquement à l'opposé de la direction d'écoulement par rapport à un courant d'air lors du fonctionnement et **en ce qu'**une alimentation en combustible, comprenant la conduite de combustible centrale (42) comportant la zone de répartition (42.1), les conduites de dérivation (43) et les buses de combustible (44), est positionnée de manière définie par rapport aux buses d'alimentation (47) au moyen d'un dispositif de positionnement (48), le dispositif de positionnement (48) étant conçu comme un élément de barre central, s'étendant sur l'axe longitudinal (L) entre la zone de répartition (42.1) et la paroi frontale (40).

2. Tête de brûleur (4) selon la revendication 1, **caractérisée en ce que** les conduites de dérivation (43) sont au moins partiellement conçues de manière identique, particulièrement en ce qui concerne la longueur, le diamètre et/ou la courbure.

3. Tête de brûleur (4) selon la revendication 1 ou 2, **caractérisée en ce que** le changement de direction s'effectue par flexion de la conduite de dérivation (43), en particulier les conduites de dérivation (43) étant réalisées respectivement en une seule pièce.

4. Tête de brûleur (4) selon l'une des revendications précédentes, **caractérisée en ce que**
les buses de combustible (44) sont disposées à l'extrémité aval des conduites de dérivation (43), la section transversale des conduites de dérivation (43) diminuant dans le diamètre extérieur vers l'embouchure.

5. Tête de brûleur (4) selon l'une des revendications précédentes, **caractérisée en ce que**
les buses de combustible (44) présentent un diamètre intérieur inférieur ou correspondant au diamètre restant de la conduite.

6. Tête de brûleur (4) selon l'une des revendications précédentes, **caractérisée en ce que**
la tête de brûleur (4) est conçue avec la zone de répartition (42.1), et de préférence avec les conduites de dérivation (43), de manière symétrique, en particulier avec une section transversale symétrique en rotation, l'axe de symétrie étant formé par l'axe longitudinal (L).

7. Tête de brûleur (4) selon l'une des revendications précédentes, **caractérisée en ce que**
la zone de répartition (42.1) présente à son extrémité aval, frontale, une paroi de fermeture (42.2) comportant une partie surélevée (42.3) qui se rétrécit radialement à l'opposé de la direction d'écoulement et rejoint les conduites de dérivation (43).

8. Tête de brûleur (4) selon l'une des revendications précédentes, **caractérisée en ce que**
la tête de brûleur (4) destinée à un acheminement au moins partiellement prémélangé de combustible et d'air de combustion présente au moins un étage de mélange comprenant au moins l'une des buses de combustible (44) et une alimentation en air (45) de la buse d'alimentation (47) entourant celle-ci dans un agencement de buse d'air/de combustible (41).

9. Tête de brûleur (4) selon l'une des revendications précédentes, **caractérisée en ce que**
l'embouchure de la buse de combustible (44) est disposée radialement dans une zone centrale, en particulier sensiblement sur un axe longitudinal central (M) de la buse d'alimentation (47), pour l'ajout du combustible dans l'air de combustion en dehors de la zone d'écoulement des parois.

10. Tête de brûleur (4) selon l'une des revendications précédentes, **caractérisée en ce que**
l'embouchure de la buse de combustible (44) est disposée dans une position axiale de la buse d'alimentation (47), immédiatement en aval ou en amont de laquelle est formé l'agencement de buse d'air/de combustible (41) destiné à l'accélération de l'air de combustion est conçu, de sorte que le combustible soit ajouté à l'écoulement d'air déjà en accélération ou accéléré au début du trajet d'accélération de l'écoulement d'air ou en aval de celui-ci.

11. Système de brûleur (1) comprenant une chambre de combustion (10) et une tête de brûleur (4) selon l'une des revendications précédentes, destiné à l'acheminement de l'air de combustion et du combustible dans la chambre de combustion (10), la tête de brûleur (4) étant disposée frontalement par rapport à la chambre de combustion (10).

12. Utilisation d'un système de brûleur (1) selon la revendication 11 en liaison avec une turbine reliée au côté sortie de la chambre de combustion (10), en particulier configurée comme une microturbine à gaz.
